# EUROPEAN PATENT SPECIFICATION

(11) **EP 3 574 152 B1**
(45) Date of publication and mention of the grant of the patent: **09.12.2020**
(21) Application number: 18701060.8
(22) Date of filing: 11.01.2018
(51) Int. Cl.: E02F 9/14, E02F 3/28

(54) **JIB ASSEMBLY**
AUSLEGERANORDNUNG
ENSEMBLE DE FLÈCHE

(30) Priority: 25.01.2017 FI 20175062
(43) Date of publication of application: 04.12.2019
(73) Proprietor: Mantsinen Group Ltd Oy, 80400 Ylämylly (FI)
(72) Inventor: GRÖHN, Pekka, 80400 Ylämylly (FI); LAAKKONEN, Pentti, 80400 Ylämylly (FI); HUOVINEN, Simo, 80400 Ylämylly (FI)
(74) Representative: Boco IP Oy Ab
(86) International application number: PCT/FI2018/050019
(87) International publication number: WO 2018/138409

(56) References cited:
- GB-A- 1 432 124
- US-A- 2 437 466
- US-A- 3 097 749

## Description

### FIELD OF THE DISCLOSURE

The present disclosure relates to a jib assembly, for example for an excavator or material handler.

### BACKGROUND OF THE DISCLOSURE

Document GB 1432124 A discloses jib assemblies, where potential energy is transferred between a jib, pivoted at on a support, and an accumulator through fluid passing via a duct between a chamber in a hydraulic jack and the accumulator as the jib is luffed by conventional means. The jack may be replaced by a jack having a rotary piston. US 2 437 466 A and US 3 097 749 A also disclose similar jib assemblies.

A problem with the known assembly is that because the pulling and pushing force of two hydraulic cylinders, i.e. the hydraulic jacks, is applied to a small area at the base of the jib, it causes a great bending moment and a concentration of stress to the jib, which results in fatigue of the structure over time. To overcome this, the jib structure must be made rugged enough, i.e. heavy, which reduces the lifting capacity and energy economy.

Another problem relates to attaching the hydraulic cylinder directly to the support and to the jib, limiting the geometry of the structure. This results in generation of a certain lifting moment at each lifting angle of the jib, which may not be practical for the need. The geometry and the required raise of the jib forces to use a hydraulic cylinder of a certain length. Because the lifting moment cannot be directed practically, the piston travel of the hydraulic cylinder must be unnecessary long, which generates lifting moment to areas where it is not needed. In high angles of the jib, extra lifting moment is a hindrance because it requires pressing the jib downwards to get the jib down, when there is no load. The stroke, i.e. the volume, of the hydraulic cylinder on the other hand is directly proportional to the volume of an accumulator when a certain force and pressure level is desired to be maintained. The volume of the accumulator is expensive for example because of the regulation relating to pressure vessels.

The aforementioned problems are especially present in excavators requiring wide movements and long jibs.

### BRIEF DESCRIPTION OF THE DISCLOSURE

An object of the present disclosure is to provide a jib assembly to solve the above problems.

The object of the disclosure is achieved by a jib assembly which is characterized by what is stated in the independent claims. The preferred embodiments of the disclosure are disclosed in the dependent claims.

The disclosure is based on the idea of providing a jib assembly comprising a jib, a linear hydraulic actuator for regulating pivotal movement of the jib and for maintaining the jib in a specific position, a lever arm attached to the jib and a draw member attached to the lever arm and to the jib, wherein the linear hydraulic actuator is attached to the lever arm and the lever arm is arranged to extend in the direction above the jib.

An advantage of jib arrangement of the disclosure is that when the jib is positioned essentially vertically, the required lifting moment is reduced significantly. In this situation, the current solution provides small lifting moment and a very small change in the length of the hydraulic cylinder in relation to the angular change. This results in ability to size the hydraulic cylinder and the accumulator practically.

Another advantage of the jib arrangement of the disclosure is that because a part of the lifting moment is transmitted by the draw member to a further point of the jib, for example to the end of the jib, it provides the jib with a smaller bending moment. Because of the geometry, only a small component of force is brought to stressed area of the jib by the lever arm. Additionally, this component of force resists the normal fatiguing bending in the positions of the jib causing most stress.

### BRIEF DESCRIPTION OF THE DRAWINGS

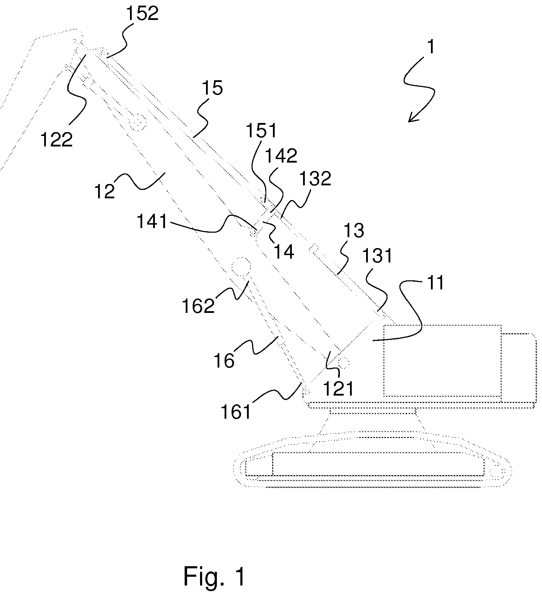

In the following the disclosure will be described in greater detail by means of preferred embodiments with reference to the accompanying drawing, in which
Figure 1 is a schematic view of a jib assembly according to an embodiment of the disclosure.

### DETAILED DESCRIPTION OF THE DISCLOSURE

The disclosure relates to a jib assembly 1. The jib assembly 1 comprises a support 11. The support 11 is for example formed by a frame of an excavator.

The jib assembly 1 comprises a jib 12. For example, the jib is arranged to support the arm of the excavator connected to the bucket (not shown in the figure). The jib 12 is attached pivotally to the support 11 for pivotal movement of the jib 12 in relation to the support 11 about a horizontal axis. For example, the jib 12 comprises a first end 121 and a second end 122, and the first end 121 of the jib 12 is attached to the support 11.

The jib assembly 1 comprises a lever arm 14. The lever arm 14 is attached essentially unrotatably to the jib 12. For example, the lever arm comprises a first end 141 and a second end 142, and the first end 141 of the lever arm 14 is attached to the jib 12. The lever arm 14 is arranged to extend in the direction above the jib 12. For example, the lever arm 14 is bolted or welded to the jib 12. Alternatively, the lever arm 14 is attached to the jib by pins (not shown in the figure) According to an embodiment, the lever arm 14 is integral with the jib 12.

The jib assembly 1 comprises a first linear hydraulic actuator 13 for regulating pivotal movement of the jib 12 and for maintaining the jib 12 in a specific position relative to the support 11. For example, the first linear hydraulic actuator 13 comprises a hydraulic cylinder. According to an embodiment, the jib assembly 1 comprises a plurality of the first linear hydraulic actuators 13. The first linear hydraulic actuator 13 is attached to the support 11. For example, the first linear hydraulic actuator 13 comprises a first end 131 and a second end 132, and the first end 131 of the first linear hydraulic actuator 13 is attached to the support 11. The first linear hydraulic actuator 13 is supported by the lever arm 14. For example, the second end 132 of the first linear hydraulic actuator 13 is connected to the second 142 end of the lever arm 14.

The jib assembly 1 comprises a draw member 15. The draw member 15 is attached essentially unrotatably to the lever arm 14 and to the jib 12. The draw member 15 is attached to the jib 12 at a position away from the support 11 in relation to the lever arm 14. For example, the draw member 15 comprises a first end 151 and a second end 152, and the first end 151 of the draw member 15 is attached essentially unrotatably to the second end 142 of the lever arm 14 and the second end 152 of the draw member 15 is attached essentially unrotatably to the second end 122 of the jib 12. According to an embodiment, the draw member 15 is a drawbar. According to an alternative embodiment, the draw member 15 is a cable. The first linear hydraulic actuator 13 is connected to the draw member 15 so that a force generated by the first linear hydraulic actuator 13 is transmitted to the draw member 15. The draw member 15 is supported by the lever arm 14. Preferably the lever arm 14 has a length and it is attached to the jib 12 at a location that allow a straight draw member 15 to be connected to the lever arm 14 and to the second end 122 of the jib.

According to an embodiment, the jib assembly 1 comprises a second linear hydraulic actuator 16. The purpose of the second linear hydraulic actuator 16 is to aid the first linear hydraulic actuator 13 with the pivotal movement of the jib 12. For example, the second linear hydraulic actuator 16 comprises a hydraulic cylinder. The second linear hydraulic actuator 16 is attached to the support 11 and to the jib 12. For example, the second linear hydraulic actuator 16 comprises a first end 161 and a second end 162, and the first end 161 of the second linear hydraulic actuator 16 is attached to the support 11 and the second end 162 of the second linear hydraulic actuator 16 is attached to the jib 12.

The disclosure relates also to an excavator comprising a jib assembly 1 as described above.

The disclosure relates also to a material handler comprising a jib assembly 1 as described above.

The disclosure relates also to use of the jib assembly 1 as described above in an excavator.

The disclosure relates also to use of the jib assembly 1 as described above in a material handler.

## Claims

1. A jib assembly (1) comprising
- a support (11);
- a jib (12) attached pivotally to the support (11) for pivotal movement of the jib (12) in relation to the support (11) about a horizontal axis; and
- a first linear hydraulic actuator (13) attached to the support (11) for regulating pivotal movement of the jib (12) and for maintaining the jib (12) in a specific position relative to the support (11);
**characterized in that**,
the jib assembly (1) further comprises
- a lever arm (14) attached unrotatably to the jib (12); and
- a draw member (15) attached unrotatably to the lever arm (14) and to the jib (12);
wherein
the first linear hydraulic actuator (13) is connected to the draw member (15) so that a force generated by the first linear hydraulic actuator (13) is transmitted to the draw member (15);
the first linear hydraulic actuator (13) and the draw member (15) are supported by the lever arm (14); and
the lever arm (14) is arranged to extend in the direction above the jib (12).

2. A jib assembly (1) according to claim 1, **characterized in that** the draw member (15) is a drawbar.

3. A jib assembly (1) according to claim 1, **characterized in that** the draw member (15) is a cable.

4. A jib assembly (1) according to any one of the preceding claims, **characterized in that** the jib assembly (1) comprises a second linear hydraulic actuator (16) comprising a first end (161) and a second end (162), the first end (161) of the second linear hydraulic actuator (16) being attached to the support (11) and the second end (162) of the second linear hydraulic actuator (16) being attached to the jib (12).

5. An excavator comprising a jib assembly (1) according to any one of claims 1 to 4.

6. A material handler comprising a jib assembly (1) according to any one of claims 1 to 4.

7. Use of the jib assembly (1) according to any one of claims 1 to 4 in an excavator.

8. Use of the jib assembly (1) according to any one of claims 1 to 4 in a material handler.

## Patentansprüche

1. Auslegeranordnung (1) umfassend:
- eine Lagerung (11);
- einen Ausleger (12), der für eine Drehbewegung des Auslegers (12) im Verhältnis zur Lagerung (11) um eine horizontale Achse, drehgelenkig an der Lagerung (11) angebracht ist; und
- einen ersten linearen hydraulischen Stellantrieb (13), der an der Lagerung (11) angebracht ist, zum Regulieren der Drehbewegung des Auslegers (12) und zum Halten des Auslegers (12) in einer besonderen Stellung im Verhältnis zur Lagerung (11);
**dadurch gekennzeichnet, dass**
die Auslegeranordnung (1) ferner umfasst:
- einen Hebelarm (14), der nichtdrehbar am Ausleger (12) angebracht ist; und
- ein Zugelement (15), das nichtdrehbar am Hebelarm (14) und am Ausleger (12) angebracht ist;
wobei
der erste lineare hydraulische Stellantrieb (13) mit dem Zugelement (15) verbunden ist, so dass eine vom ersten linearen hydraulischen Stellantrieb (13) erzeugte Kraft auf das Zugelement (15) übertragen wird;
der erste lineare hydraulische Stellantrieb (13) und das Zugelement (15) vom Hebelarm (14) gelagert werden; und
der Hebelarm (14) so angeordnet ist, dass er sich in Richtung oberhalb des Auslegers (12) erstreckt.

2. Auslegeranordnung (1) nach Anspruch 1, **dadurch gekennzeichnet, dass** das Zugelement (15) eine Zugstange ist.

3. Auslegeranordnung (1) nach Anspruch 1, **dadurch gekennzeichnet, dass** das Zugelement (15) ein Seil ist.

4. Auslegeranordnung (1) nach einem der vorhergehenden Ansprüche, **dadurch gekennzeichnet, dass** die Auslegeranordnung (1) einen zweiten linearen hydraulischen Stellantrieb (16) umfasst, der ein erstes Ende (161) und ein zweites Ende (162) aufweist, wobei das erste Ende (161) des zweiten linearen hydraulischen Stellantriebs (16) an der Lagerung (11) angebracht ist und das zweite Ende (162) des zweiten linearen hydraulischen Stellantriebs (16) am Ausleger (12) angebracht ist.

5. Bagger, der eine Auslegeranordnung (1) nach einem der Ansprüche 1 bis 4 umfasst.

6. Materialumschlagmaschine, die eine Auslegeranordnung (1) nach einem der Ansprüche 1 bis 4 umfasst.

7. Verwendung der Auslegeranordnung (1) nach einem der Ansprüche 1 bis 4 in einem Bagger.

8. Verwendung der Auslegeranordnung (1) nach einem der Ansprüche 1 bis 4 in einer Materialumschlagmaschine.

## Revendications

1. Agencement de flèche (1) comprenant :
- un support (11) ;
- une flèche (12) attachée au support (11) de manière articulée pour un mouvement pivotant de la flèche (12) par rapport au support (11) autour d'un axe horizontal ; et
- un premier actionneur hydraulique linéaire (13) attaché au support (11) pour réguler le mouvement pivotant de la flèche (12) et pour maintenir la flèche (12) dans une position spécifique relative au support (11) ;
**caractérisé en ce que**
l'agencement de flèche (1) comprend également
- un bras de levier (14) attaché à la flèche (12) de manière non rotative ; et
- un élément de tirage (14) attaché de manière non rotative au bras de levier (14) et à la flèche (12) ;
dans lequel
le premier actionneur hydraulique linéaire (13) est relié à l'élément de tirage (15) de telle façon qu'une force générée par le premier actionneur hydraulique linéaire (13) soit transmise à l'élément de tirage (15) ;
le premier actionneur hydraulique (13) et l'élément de tirage (15) sont appuyés par le bras de levier (14) ; et
le bras de levier (14) est agencé de manière à s'étendre dans le sens au-dessus de la flèche (12).

2. Agencement de flèche (1) selon la revendication 1, **caractérisé en ce que** l'élément de tirage (15) est une barre de tirage.

3. Agencement de flèche (1) selon la revendication 1, **caractérisé en ce que** l'élément de tirage (15) est un câble.

4. Agencement de flèche (1) selon l'une des revendications précédentes, **caractérisé en ce que** l'agencement de flèche (1) comprend un deuxième actionneur hydraulique linéaire (16) comprenant une première extrémité (161) et une deuxième extrémité (162), ladite première extrémité (161) dudit deuxième actionneur hydraulique linéaire (16) étant attachée au support (11) et ladite deuxième extrémité (162) dudit deuxième actionneur hydraulique linéaire (16) étant attachée à la flèche (12).

5. Pelle excavatrice comprenant un agencement de flèche (1) selon l'une des revendications 1 à 4.

6. Équipement de manutention de matériaux comprenant un agencement de flèche (1) selon l'une des revendications 1 à 4.

7. Utilisation de l'agencement de flèche (1) selon l'une des revendications 1 à 4 dans une pelle excavatrice.

8. Utilisation de l'agencement de flèche (1) selon l'une des revendications 1 à 4 dans un équipement de manutention de matériaux.
